# FASCICULE DE BREVET EUROPEEN

(11) **EP 2 620 071 B1**
(45) Date de publication et mention de la délivrance du brevet: **10.08.2016**
(21) Numéro de dépôt: 13000341.1
(22) Date de dépôt: 23.01.2013
(51) Int. Cl.: A43C 7/08, F16G 11/10

(54) **Elément chaussant muni d'un dispositif de serrage amélioré**
Schuhelement, das mit einer verbesserten Einspannvorrichtung ausgestattet ist
Footwear element provided with an improved tightening device

(30) Priorité: 25.01.2012 FR 1200206
(43) Date de publication de la demande: 31.07.2013
(73) Titulaire: SALOMON S.A.S., 74370 Metz-Tessy (FR)
(72) Inventeur: Hexemer, Matt, Toronto, M6H 1V7 (CA)

(56) Documents cités:
- EP-A1- 1 182 375
- EP-A1- 1 813 163
- US-A- 3 574 900
- US-A- 4 896 403
- US-A1- 2005 097 780
- US-A1- 2008 250 618

## Description

L'invention concerne un dispositif mécanique de blocage de brins souples tels que des câbles, des cordes, des fils, des lacets, ou tout autre produit présenté sous un aspect similaire.

L'invention a trait plus particulièrement au blocage des lacets d'éléments chaussants tels que des chaussures en vue du serrage de celles-ci. Ainsi l'invention se rapporte aussi à un élément chaussant équipé avec un dispositif de blocage, ou à un système de serrage à lacet équipé avec un dispositif de blocage.

L'invention concerne plus particulièrement encore le domaine du sport, et notamment les chaussures de surf sur neige ou snowboard, de ski de piste, de ski de fond, de patin à roues ou à lame, de vélo, de randonnée, de marche, ou autre, ainsi que des systèmes de serrage de fixation, des articles tels que des sacs à dos comportant de tels brins, en vue du serrage et/ou de la compression de ces produits ou de parties de ceux-ci.

Il est connu de bloquer des brins souples à l'aide d'un dispositif.

Par exemple le document FR 2 896 384 divulgue un dispositif de blocage agissant pour au moins un brin de lacet. Le dispositif selon ce document comprend un corps qui s'étend longitudinalement entre une première extrémité et une deuxième extrémité, transversalement entre un premier bord et un deuxième bord, et en hauteur entre une face de liaison et une face libre. Le corps définit un passage pour chaque brin de lacet. Le dispositif comprend un organe de blocage qui coopère avec le passage pour le blocage ou le déblocage de chaque brin de lacet. Le passage s'étend longitudinalement depuis une première ouverture d'extrémité jusqu'à une deuxième ouverture d'extrémité, le passage présentant une ouverture longitudinale qui s'étend depuis la première ouverture d'extrémité jusqu'à la deuxième ouverture d'extrémité, l'ouverture longitudinale débouchant sur la face libre, de façon à permettre l'introduction ou le dégagement de chaque brin dans une direction perpendiculaire à la face de liaison.

Le dispositif de blocage selon le document FR 2 896 384 permet un serrage ou un desserrage plus rapide, par rapport à un dispositif selon l'art antérieur, de l'objet auquel il est associé. De plus le dispositif selon ce document permet de serrer ou de desserrer l'objet par des opérations simples. Le dispositif a donc constitué un progrès au regard de l'art antérieur. Cependant il est apparu malgré tout que, dans certains cas, la rapidité de mise en oeuvre ne soit pas encore suffisante, ou que les opérations de serrage ou de desserrage ne soient pas encore assez simples. En effet, l'introduction du lacet dans le passage par un utilisateur nécessite généralement les deux mains. L'introduction est donc une opération qui nécessite de l'attention, et qui est plus facile si le dispositif est bien en vue ou à portée immédiate des mains. Ce n'est pas toujours le cas. De plus il arrive que l'utilisateur porte des gants, lesquels sont un obstacle à la dextérité ou à la précision des manipulations.

Par rapport à cela, l'invention a pour but général d'améliorer un dispositif de blocage agissant pour au moins un brin de lacet. Par corollaire, l'invention cherche à améliorer le serrage d'un élément chaussant.

L'invention a notamment pour but d'augmenter encore la rapidité de serrage, et de faire en sorte que cette rapidité soit systématique. En d'autres termes, le serrage doit être rapide dans tous les cas. L'invention cherche aussi à simplifier les opérations de serrage ou de desserrage de l'objet. Par corollaire il s'agit de simplifier l'utilisation du dispositif de blocage.

Pour ce faire, l'invention propose un dispositif de blocage agissant pour au moins un brin de lacet, le dispositif comprenant un corps qui s'étend longitudinalement entre une première extrémité et une deuxième extrémité, transversalement entre un premier bord et un deuxième bord, et en hauteur entre une face de liaison et une face libre, le corps définissant un passage pour chaque brin de lacet, le dispositif comprenant un organe de blocage qui coopère avec le passage pour le blocage ou le déblocage de chaque brin de lacet, le passage s'étendant longitudinalement depuis une première ouverture d'extrémité jusqu'à une deuxième ouverture d'extrémité, le passage présentant une ouverture longitudinale qui s'étend depuis la première ouverture d'extrémité jusqu'à la deuxième ouverture d'extrémité.

Le dispositif de blocage selon l'invention est caractérisé par le fait que l'ouverture longitudinale débouche sur un bord du corps, de façon à permettre l'introduction ou le dégagement de chaque brin dans le passage selon une direction transversale du dispositif.

Cela signifie que l'ouverture longitudinale est disposée transversalement sur le corps et que, en conséquence, elle laisse passer le lacet en direction transversale. En d'autres termes le lacet peut être engagé dans le passage, ou dégagé en dehors de celui-ci, par déplacement en direction transversale.

Dans un cas où le dispositif de blocage est apposé sur un élément chaussant, c'est-à-dire dans un cas où la face de liaison est solidarisée à la tige de l'élément chaussant, c'est généralement le glissement du lacet en tension, parallèlement à la tige de l'élément, qui permet l'engagement dans le passage ou le dégagement hors de celui-ci. On peut dire que, par sa position latérale, l'ouverture longitudinale capte un brin du lacet lors d'un déplacement de celui-ci vers le dispositif, si ce déplacement est tangent à la portion de tige qui porte le dispositif. Ce déplacement est généralement obtenu par la tension exercée sur le lacet, à l'aide d'une seule main, pour serrer l'élément chaussant. La tension provoque un rapprochement d'une portion tendue du lacet vers le dispositif, dans un mouvement de glissement parallèlement à la tige. Cette opération est avantageusement à la fois simple et rapide. Elle est réalisée d'un geste facile à exécuter, même avec des gants. La mise en place du brin de lacet dans le passage se fait avec précision, même si la manipulation n'est pas très précise, car la tige guide le lacet. On peut dire que le dispositif de blocage de l'invention augmente la rapidité de serrage, et ce de manière systématique. Le dispositif de blocage simplifie les opérations de serrage ou de desserrage de l'élément chaussant et, de manière générale, de l'objet muni du dispositif.

Au final l'invention améliore un dispositif de blocage agissant pour au moins un brin de lacet.

D'autres caractéristiques et avantages de l'invention seront mieux compris à l'aide de la description qui va suivre, en regard du dessin annexé illustrant, selon une forme de réalisation non limitative, comment l'invention peut être réalisée, et dans lequel :
- la figure 1 est une vue en perspective avant d'un élément chaussant muni d'un dispositif de blocage, selon la forme de réalisation décrite de l'invention,
- la figure 2 est une vue en perspective du dispositif de blocage présent sur la figure 1, lors d'une étape initiale de serrage de l'élément chaussant,
- la figure 3 est similaire à la figure 2, pour une étape finale de serrage de l'élément chaussant,
- la figure 4 est une vue d'une extrémité, ici l'extrémité supérieure, du dispositif de blocage,
- la figure 5 est une vue de côté du dispositif de blocage,
- la figure 6 est une vue de dessus du dispositif de blocage ouvert, lors de l'étape initiale de serrage,
- la figure 7 est similaire à la figure 6, lors de l'étape finale de serrage.

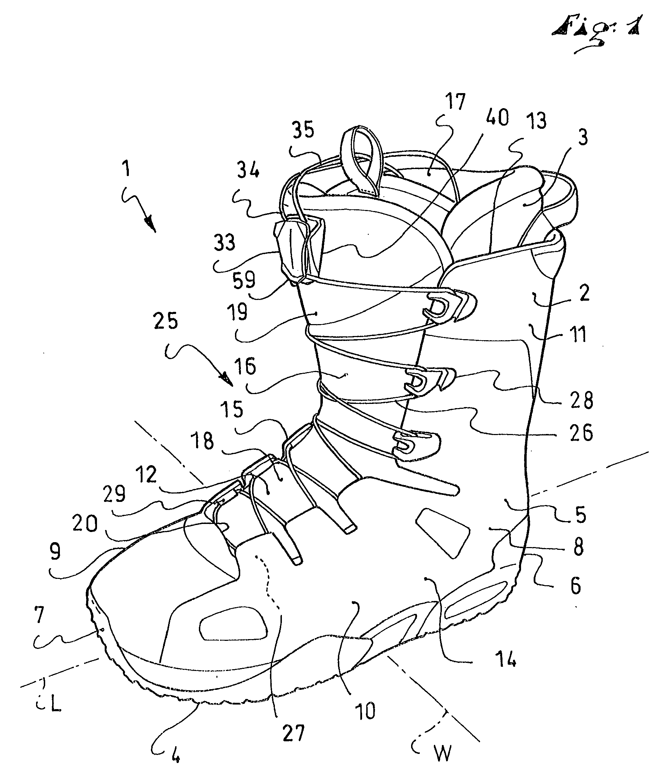

La forme de réalisation, décrite après à l'aide des figures 1 à 7, concerne par exemple des chaussures de snowboard. Cependant l'invention s'applique à d'autres domaines tels que ceux évoqués avant.

Comme le montre la figure 1, une chaussure 1 est prévue pour accueillir le pied d'un utilisateur. De manière connue, et non limitative, la chaussure 1 comprend une enveloppe externe 2 et une enveloppe interne ou chausson 3. L'emploi de ce dernier n'est pas obligatoire mais apporte des propriétés parfois recherchées, comme le confort. L'enveloppe externe 2, appelée élément chaussant, comprend un semelage externe 4 et une tige 5 solidarisée au semelage. L'élément chaussant 2 s'étend en longueur, selon une direction longitudinale L, entre une extrémité arrière ou talon 6 et une extrémité avant ou pointe 7, et en largeur, selon une direction transversale W, entre un côté latéral 8 et un côté médial 9.

Telle que représentée la tige 5 comprend une portion basse 10, prévue pour couvrir le pied, ainsi qu'une portion haute 11, prévue pour entourer la cheville et éventuellement le bas de jambe. Cependant, l'invention s'applique aussi à un élément chaussant comprenant seulement une portion basse, ou à l'enveloppe interne 3.

Selon la forme de réalisation décrite, la tige 5 présente un dessus 12 au niveau de la portion basse 10, et une extrémité supérieure 13 ou extrémité libre au niveau de la portion haute 11. Ainsi l'élément chaussant 2 s'étend en hauteur depuis le semelage externe 4 jusqu'au dessus 12 du côté de la pointe 7, et depuis le semelage externe 4 jusqu'à l'extrémité supérieure 13 du côté du talon 6.

L'élément chaussant 2 est structuré pour permettre des inclinaisons du bas de jambe pendant la conduite d'une planche, un bon déroulement du pied pendant la marche, des transmissions d'informations sensorielles, et des transmissions d'impulsions pour des appuis ou des réceptions. C'est pourquoi le semelage externe 4 et la tige 5 sont relativement souples.

De manière non limitative, la tige 5 comprend un quartier latéral 14, relié au semelage externe 4 au niveau du côté latéral 8, ainsi qu'un quartier médial 15, relié quant à lui au semelage externe 4 au niveau du côté médial 9. L'élément chaussant 2 présente une ouverture de chaussage 16, laquelle s'étend depuis l'extrémité supérieure 13 vers l'extrémité avant 7. Du côté de l'extrémité supérieure, l'ouverture 16 présente une subdivision arrière 17, destinée à laisser passer le pied, et aussi à entourer le bas de jambe après chaussage. Depuis la subdivision arrière 17 et vers l'avant, l'ouverture de chaussage 16 présente une subdivision avant 18 qui autorise une variation de dimension de l'ouverture et du volume de chaussage. Bien entendu, les subdivisions arrière 17 et avant 18 se prolongent l'une l'autre. On observe en complément que l'élément chaussant 2 comprend une languette 19 qui s'étend le long de la subdivision avant 18 de l'ouverture 16, entre le quartier latéral 14 et le quartier médial 15. La languette 19 est solidarisée au reste de la tige 5 à proximité de la pointe 7, c'est-à-dire à la limite avant 20 de l'ouverture 16. Cette limite 20 est située en retrait de la pointe 7, à une distance comprise entre 10 et 35% de la longueur de l'élément chaussant 2.

Afin d'être serré de manière réversible, l'élément chaussant 2 comprend un dispositif de serrage réversible 25 des quartiers latéral 14 et médial 15. Le dispositif 25 comprend, à titre d'exemple, un lacet 26, des passants 27, 28, 29, ainsi qu'un dispositif de blocage rapide 33 qui sera présenté plus en détail après.

De manière non limitative, l'élément chaussant 2 comprend six passants latéraux 27, 28, ainsi que six passants médiaux 29. Du côté latéral, le dispositif 25 comprend trois passants bas 27 situés sur la portion basse 10, ainsi que trois passants hauts 29 situés sur la portion haute 11. Par analogie, du côté médial, le dispositif 25 comprend trois passants bas 29 situés sur la portion basse 10, ainsi que trois passants hauts, non visibles, situés sur la portion haute 11. Le lacet 26 chemine par les passants, entre les quartiers 14, 15, en formant une boucle au niveau des passants bas 27, 29, et en donnant deux brins 34, 35 qui coopèrent avec le dispositif 33 pour un blocage rapide, comme il va être détaillé après.

Comme on peut le considérer sur l'ensemble des figures 1 à 7, le dispositif de blocage 33 comprend un corps 40 qui s'étend longitudinalement entre une première extrémité 41 et une deuxième extrémité 42, transversalement entre un premier bord 43 et un deuxième bord 44, et en hauteur, ou en épaisseur, entre une face de liaison 45 et une face libre 46. On peut observer que la face de liaison 45 est solidarisée à la tige 5 de l'élément chaussant 2, par exemple à la languette 19, à proximité de l'extrémité supérieure 13. La première extrémité 41 est tournée vers la subdivision avant 18 de l'ouverture de chaussage 16 et, par corollaire, la deuxième extrémité 42 est orientée vers l'extrémité supérieure 13. De manière arbitraire on désigne le premier bord 43 comme latéral, et le deuxième bord 44 comme médial. On verra par la suite que chaque brin 34, 35 du lacet 26 peut se déplacer dans le dispositif de blocage 33 dans une direction qui va de la première extrémité 41 à la deuxième 42, c'est-à-dire aussi, à titre d'exemple, selon la direction longitudinale L de l'élément chaussant 2. La partie du lacet 26 comprise entre le dispositif de blocage 33 et la limite avant 20 peut serrer la tige 5 de manière réversible.

Dans cette optique le corps 40 définit un passage 51, 52 pour chaque brin 34, 35 de lacet 26, le dispositif de blocage 33 comprenant un organe de blocage 53, 54 qui coopère avec le passage 51, 52 pour le blocage ou le déblocage de chaque brin 34, 35 de lacet 26, le passage 51, 52 s'étendant longitudinalement depuis une première ouverture d'extrémité 55, 56 jusqu'à une deuxième ouverture d'extrémité 57, 58.

En fait, selon la forme de réalisation décrite, et de manière non limitative, le corps 40 du dispositif de blocage 33 définit un premier passage 51, ici passage latéral, qui s'étend longitudinalement depuis une première ouverture d'extrémité 55 jusqu'à une deuxième ouverture d'extrémité 57, ainsi qu'un deuxième passage 52, ici passage médial, qui s'étend longitudinalement depuis une première ouverture d'extrémité 56 jusqu'à une deuxième ouverture d'extrémité 58. Chacune des premières ouvertures d'extrémité 55, 56 d'un passage 51, 52 est située au niveau de la première extrémité 41 du corps 40, et chacune des deuxièmes ouvertures d'extrémité 57, 58 d'un passage 51, 52 est située au niveau de la deuxième extrémité 42 du corps 40. Chaque passage accueille un brin 34, 35 de lacet 26. En conséquence le dispositif de blocage 33 comprend un premier organe de blocage 53, pour le premier passage 51, ainsi qu'un deuxième organe de blocage 54, pour le deuxième passage 52. On verra plus loin quels sont les structures et le mode de fonctionnement de ces organes.

Le premier passage 51 présente une ouverture longitudinale latérale 61 qui s'étend depuis la première ouverture d'extrémité 55 jusqu'à la deuxième ouverture d'extrémité 57. De même le deuxième passage 52 présente une ouverture longitudinale médiale 62 qui s'étend depuis la première ouverture d'extrémité 56 jusqu'à la deuxième ouverture d'extrémité 58. Dans chaque cas, l'ouverture longitudinale permet selon les besoins de faire coopérer un brin de lacet avec le dispositif de blocage 33 ou, au contraire, d'interrompre la coopération.

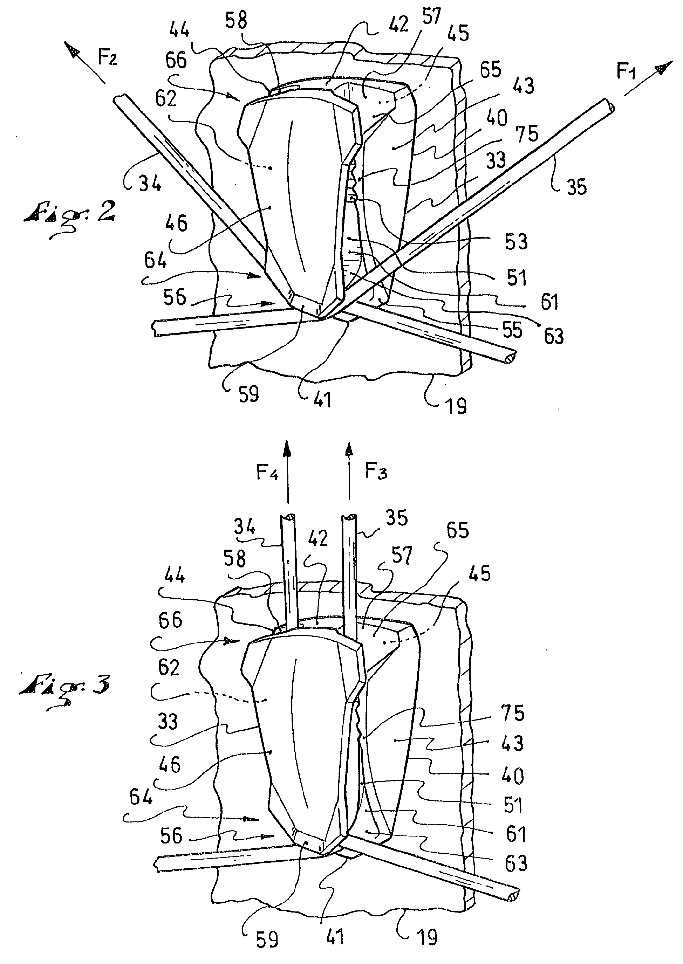

Selon l'invention, pour chaque passage 51, 52, l'ouverture longitudinale 61, 62 débouche sur un bord 43, 44 du corps 40 du dispositif de blocage 33, de façon à permettre l'introduction ou le dégagement de chaque brin dans le passage selon une direction transversale du dispositif. Cette direction est parallèle à la face de liaison 45, et s'étend du premier bord 43 au second bord 44 ou vice versa. Cela fait que l'introduction ou le dégagement d'un brin 34, 35 est obtenu par un mouvement de celui-ci parallèlement à la face de liaison 45. Etant donné que cette dernière est disposée sur la tige 5, plus précisément sur la languette 19, le mouvement d'un brin est tangent à la tige 5, au moins à proximité du dispositif 33. Comme on peut le considérer sur les figures 2 et 3, le serrage de l'élément chaussant 2, c'est-à-dire en fait le serrage de la tige 5, s'obtient par mise en place des brins 34, 35 en contact avec le corps 40, selon les flèches F1, F2, puis par traction des brins dans le sens de la longueur du dispositif de blocage 33, selon les flèches F3, F4.

En premier lieu plus précisément, selon la figure 2, la mise en contact des brins 34, 35 avec le corps 40 se fait par application de ceux-ci sur la première extrémité 41. Pour faciliter cette action, le dispositif de blocage 33 comprend une extension 59 qui fait saillie dans le plan de la face libre 46, en direction longitudinale, au niveau de la première extrémité 41. L'extension 59 est une patte qui s'oppose à un déplacement des brins 34, 35 dans un sens d'éloignement de la face de liaison 45, et donc de la tige 5, lorsqu'ils 34, 35 sont en appui sur la première extrémité 41. Grâce à cet aménagement, les brins 34, 35 restent facilement au contact du dispositif 33 pendant que les tractions selon les flèches F1, F2 amorcent le serrage de la tige 5. On peut observer que pour leur application sur le corps 40, les brins 34, 35 se croisent. Ainsi, parce que le dispositif 33 est disposé sur la languette 19, le brin 34 qui arrive du côté latéral 8 passe du côté médial 9 et, à l'inverse, le brin 35 qui arrive du côté médial 9 passe du côté latéral 8.

En second lieu, selon la figure 3, une traction des brins 34, 35 selon les flèches F3, F4 a vocation à effectuer directement le serrage de la tige 5. En effet, chaque brin 34, 35 tendu pivote par rapport à un point matérialisé par la première extrémité 41, sous l'extension ou patte 59. La traction des brins 34, 35 suffit à les orienter selon la direction longitudinale du dispositif de blocage 33, c'est-à-dire dans la direction qui va de la première 41 à la deuxième 42 extrémité. La traction est exercée à la main par l'utilisateur selon la direction longitudinale ci-avant évoquée laquelle, compte-tenu de l'orientation du dispositif 33 sur la tige, est contenue dans un plan longitudinal de la chaussure 1, le plan étant perpendiculaire au semelage 4. Cela permet à l'utilisateur de serrer la tige 5 par simple traction d'une main, dans un sens d'éloignement du pied. Ce mouvement est naturel, facile et rapide à exécuter. Les brins 34, 35 se mettent d'eux-mêmes respectivement dans un passage 51, 52 du corps 40.

Afin de faciliter au maximum l'opération de serrage ci-avant décrite, l'invention prévoit que l'ouverture longitudinale 61, 62 présente un élargissement 63, 64 au niveau de la première extrémité 41 du corps 40. De manière non limitative cela vaut pour chaque passage 51, 52. Il faut donc considérer ici que le dispositif de blocage 33 présente deux élargissements 63, 64 au niveau de la première extrémité 41.

A titre d'exemple non limitatif, chaque élargissement est réalisé en partie au moins par une inclinaison localisée de la face libre 46, au niveau de la limite entre l'ouverture longitudinale 61, 62 et l'ouverture d'extrémité 55, 56 dans un sens d'éloignement de la face de liaison 45. L'inclinaison localisée forme un guide qui se rétrécit depuis la première extrémité 41 vers la deuxième extrémité 42. Cela favorise l'introduction de chaque brin de lacet 34, 35 dans son passage d'accueil, lors d'une traction de serrage.

Dans le même esprit l'ouverture longitudinale 61, 62 présente un élargissement 65, 66 au niveau de la deuxième extrémité 42 du corps 40. Là encore, de manière non limitative, cela vaut pour chaque passage 51, 52. Le dispositif de blocage 33 présente deux élargissements 65, 66 au niveau de la deuxième extrémité 42.

A nouveau à titre d'exemple non limitatif, chaque élargissement est réalisé en partie au moins par une inclinaison localisée de la face libre 46, au niveau de la limite entre l'ouverture longitudinale 61, 62 et l'ouverture d'extrémité 57, 58, dans un sens d'éloignement de la face de liaison 45. L'inclinaison localisée forme un guide qui se rétrécit depuis la deuxième extrémité 42 vers la première extrémité 41. Cela favorise la mise en place finale de chaque brin de lacet 34, 35 dans son passage d'accueil, lors de la traction de serrage. Les élargissements 65, 66 ont également pour fonction de faciliter au maximum une opération de desserrage, laquelle est réalisée en délogeant chaque brin 34, 35 de lacet 26 du passage 51, 52 où il est retenu. Il suffit d'écarter transversalement chaque brin par l'ouverture longitudinale 61, 62 pour obtenir le desserrage de la chaussure. En complément, pour des raisons pratiques et d'esthétique, la face libre 46 du dispositif 33 délimite une paroi continue le long du passage 51, 52. Cette continuité améliore le guidage du brin dans le passage et, on le verra après, optimise la coopération de l'organe de blocage 53, 54 avec le brin.

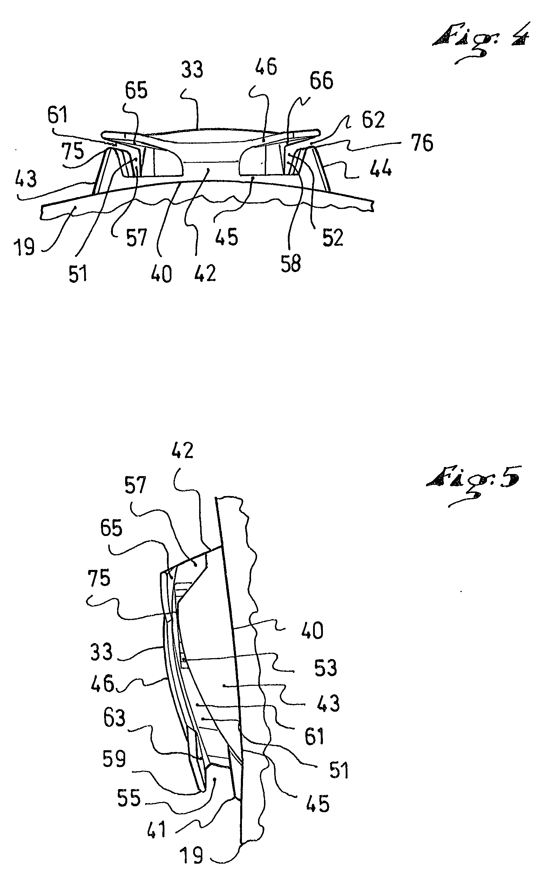

Comme le montrent bien les figures 4 et 5, chaque bord 43, 44 s'étend respectivement dans le sens de la hauteur du dispositif de blocage 33, depuis la face de liaison 45 vers la face libre 46, jusqu'à un sommet 75, 76, sans toutefois rejoindre la face libre 46. L'espace qui subsiste entre un bord 43, 44 et la face libre 46 délimite l'ouverture longitudinale 61, 62 pour l'introduction ou le dégagement transversal d'un brin de lacet. Ici la face de liaison 45 et les bords 43, 44 forment une pièce monobloc, et la face libre 46 vient à l'aplomb de chacun des bords.

Afin de coopérer avec un organe de blocage 53, 54, chaque bord 43, 44 présente une forme générale convexe, son sommet étant en vis-à-vis de l'organe de blocage transversalement. On va voir après que cette forme permet, d'une part, un engagement ou un dégagement transversal plus facile d'un brin de lacet et, d'autre part, un blocage du brin entre l'organe et le sommet du bord.

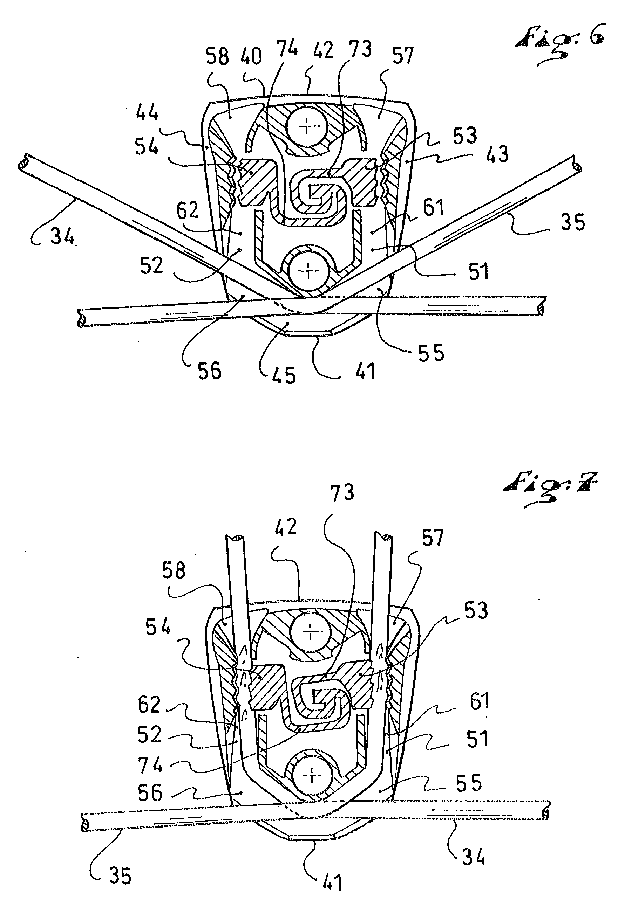

Comme on peut l'observer sur les figures 6 et 7, chaque organe de blocage 53, 54 est constitué par une came portée par une lame élastique 73, 74. Chaque lame est pliée pour former des circonvolutions, ce qui présente l'avantage de réduire son encombrement. En fait les deux lames se rejoignent et forment des circonvolutions. De manière non limitative, les cames 53, 54 et les lames 73, 74 forment une pièce monobloc. Cela simplifie le dispositif. Chaque lame est un moyen élastique qui sollicite en permanence l'organe de blocage 53, 54 dans une direction de blocage, c'est-à-dire transversalement vers le sommet 75, 76 d'un bord 43,44.

Au moment de l'application des brins 34, 35 sur le dispositif comme c'est le cas sur la figure 6, et par similitude avec la figure 2, chaque organe de blocage 53, 54 est contre ou à proximité d'un sommet 75, 76 d'un bord 43, 44. Ensuite au cours du serrage comme c'est le cas sur la figure 7, et par similitude avec la figure 3, chaque organe de blocage 53, 54 prend appui sur un brin 34, 35. De manière connue, la forme et l'implantation de chaque organe dans le corps 40 autorise un déplacement longitudinal d'un brin dans un sens qui va de la première extrémité 41 vers la deuxième extrémité 42, mais pas dans le sens inverse. C'est pourquoi le blocage des brins, et par conséquent le serrage de l'élément chaussant 2, est maintenu quand la traction du lacet 26 cesse.

Dans tous les cas l'invention est réalisée à partir de matériaux et selon des techniques de mise en oeuvre connus de l'homme du métier.

Bien entendu l'invention n'est pas limitée à la forme de réalisation ci-avant décrite, et comprend tous les équivalents techniques pouvant entrer dans la portée des revendications qui vont suivre.

Par exemple, il peut être prévu différentes formes pour les bords 43, 44 du corps 40, pour les faces 45, 46, et aussi pour les cames 53, 54 et les moyens élastiques.

Il peut être prévu qu'un organe de blocage 53, 54 soit mobile dans une direction perpendiculaire à la face de liaison 45.

## Revendications

1. Dispositif de blocage (33) agissant pour au moins un brin (34, 35) de lacet (26), le dispositif (33) comprenant un corps (40) qui s'étend longitudinalement entre une première extrémité (41) et une deuxième extrémité (42), transversalement entre un premier bord (43) et un deuxième bord (44), et en hauteur entre une face de liaison (45) et une face libre (46), le corps (40) définissant un passage (51, 52) pour chaque brin (34, 35) de lacet (26), le dispositif (33) comprenant un organe de blocage (53, 54) qui coopère avec le passage (51, 52) pour le blocage ou le déblocage de chaque brin (34, 35) de lacet (26), un moyen élastique (73, 74) sollicitant en permanence l'organe de blocage (53, 54) dans une direction de blocage, le passage (51, 52) s'étendant longitudinalement depuis une première ouverture d'extrémité (55, 56) jusqu'à une deuxième ouverture d'extrémité (57, 58), le passage (51, 52) présentant une ouverture longitudinale (61, 62) qui s'étend depuis la première ouverture d'extrémité (55, 56) jusqu'à la deuxième ouverture d'extrémité (57, 58),
**caractérisé par le fait que** l'ouverture longitudinale (61, 62) débouche sur un bord (43, 44) du corps (40), de façon à permettre l'introduction ou le dégagement de chaque brin (34, 35) dans le passage (51, 52) selon une direction transversale du dispositif.

2. Dispositif de blocage (33) selon la revendication 1, **caractérisé par le fait que** le corps (40) définit un premier passage (51) qui s'étend longitudinalement depuis une première ouverture d'extrémité (55) jusqu'à une deuxième ouverture d'extrémité (57), ainsi qu'un deuxième passage (52) qui s'étend longitudinalement depuis une première ouverture d'extrémité (56) jusqu'à une deuxième ouverture d'extrémité (58).

3. Dispositif de blocage (33) selon la revendication 1 ou 2, **caractérisé par le fait que** l'ouverture longitudinale (61, 62) présente un élargissement (63, 64) au niveau de la première extrémité (41) du corps (40).

4. Dispositif de blocage (33) selon l'une des revendications 1 à 3, **caractérisé par le fait que** l'ouverture longitudinale (61, 62) présente un élargissement (65, 66) au niveau de la deuxième extrémité (42) du corps (40).

5. Dispositif de blocage (33) selon l'une des revendications 1 à 4, **caractérisé par le fait que** la face libre (46) délimite une paroi continue le long du passage (51, 52).

6. Dispositif de blocage (33) selon l'une des revendications 1 à 5, **caractérisé par le fait qu'**il comprend une extension (67) qui fait saillie dans le plan de la face libre (46), en direction longitudinale, au niveau de la première extrémité (41).

7. Dispositif de blocage (33) selon l'une des revendications 1 à 6, **caractérisé par le fait que** chaque bord (43, 44) s'étend respectivement dans le sens de la hauteur du dispositif de blocage, depuis la face de liaison (45) vers la face libre (46), jusqu'à un sommet (75, 76).

8. Dispositif de blocage (33) selon la revendication 7, **caractérisé par le fait que** chaque bord (43, 44) présente une forme générale convexe, son sommet (75, 76) étant en vis-à-vis de l'organe de blocage (53, 54) transversalement.

9. Dispositif de blocage (33) selon l'une des revendications 1 à 8, **caractérisé par le fait que** chaque organe de blocage (53, 54) est constitué par une came portée par une lame élastique (73, 74).

10. Dispositif de blocage (33) selon la revendication 9, **caractérisé par le fait que** les deux lames (73, 74) se rejoignent et forment des circonvolutions.

## Patentansprüche

1. Blockiervorrichtung (33), die für mindestens ein Endstück (34, 35) eines Schnürsenkels (26) wirkt, wobei die Vorrichtung (33) einen Körper (40) enthält, der sich in Längsrichtung zwischen einem ersten Ende (41) und einem zweiten Ende (42), quer zwischen einem ersten Rand (43) und einem zweiten Rand (44), und in der Höhe zwischen einer Verbindungsseite (45) und einer freien Seite (46) erstreckt, wobei der Körper (40) einen Durchgang (51, 52) für jedes Endstück (34, 35) eines Schnürsenkels (26) definiert, wobei die Vorrichtung (33) ein Blockierelement (53, 54) enthält, das mit dem Durchgang (51, 52) zum Blockieren oder Lösen jedes Endstücks (34, 35) eines Schnürsenkels (26) zusammenwirkt, wobei eine elastische Einrichtung (73, 74) das Blockierelement (53, 54) durchgehend in einer Blockierrichtung beansprucht, wobei der Durchgang (51, 52) sich in Längsrichtung von einer ersten Endöffnung (55, 56) bis zu einer zweiten Endöffnung (57, 58) erstreckt, wobei der Durchgang (51, 52) eine Längsöffnung (61, 62) aufweist, die sich von der ersten Endöffnung (55, 56) bis zur zweiten Endöffnung (57, 58) erstreckt,
**dadurch gekennzeichnet, dass** die Längsöffnung (61, 62) an einem Rand (43, 44) des Körpers (40) mündet, um die Einführung oder das Entfernen jedes Endstücks (34, 35) in den/aus dem Durchgang (51, 52) gemäß einer Querrichtung der Vorrichtung zu ermöglichen.

2. Blockiervorrichtung (33) nach Anspruch 1, **dadurch gekennzeichnet, dass** der Körper (40) einen ersten Durchgang (51), der sich in Längsrichtung von einer ersten Endöffnung (55) bis zu einer zweiten Endöffnung (57) erstreckt, sowie einen zweiten Durchgang (52) definiert, der sich in Längsrichtung von einer ersten Endöffnung (56) bis zu einer zweiten Endöffnung (58) erstreckt.

3. Blockiervorrichtung (33) nach Anspruch 1 oder 2, **dadurch gekennzeichnet, dass** die Längsöffnung (61, 62) eine Verbreiterung (63, 64) im Bereich des ersten Endes (41) des Körpers (40) aufweist.

4. Blockiervorrichtung (33) nach einem der Ansprüche 1 bis 3, **dadurch gekennzeichnet, dass** die Längsöffnung (61, 62) eine Verbreiterung (65, 66) im Bereich des zweiten Endes (42) des Körpers (40) aufweist.

5. Blockiervorrichtung (33) nach einem der Ansprüche 1 bis 4, **dadurch gekennzeichnet, dass** die freie Seite (46) eine durchgehende Wand entlang des Durchgangs (51, 52) begrenzt.

6. Blockiervorrichtung (33) nach einem der Ansprüche 1 bis 5, **dadurch gekennzeichnet, dass** sie eine Verlängerung (67) enthält, die in der Ebene der freien Seite (46) in Längsrichtung im Bereich des ersten Endes (41) vorsteht.

7. Blockiervorrichtung (33) nach einem der Ansprüche 1 bis 6, **dadurch gekennzeichnet, dass** jeder Rand (43, 44) sich in Richtung der Höhe der Blockiervorrichtung von der Verbindungsseite (45) zur freien Seite (46) bis zu einem Scheitel (75, 76) erstreckt.

8. Blockiervorrichtung (33) nach Anspruch 7, **dadurch gekennzeichnet, dass** jeder Rand (43, 44) eine allgemein konvexe Form aufweist, wobei sein Scheitel (75, 76) sich in Querrichtung gegenüber dem Blockierelement (53, 54) befindet.

9. Blockiervorrichtung (33) nach einem der Ansprüche 1 bis 8, **dadurch gekennzeichnet, dass** jedes Blockierelement (53, 54) aus einer Nocke besteht, die von einer elastischen Lamelle (73, 74) getragen wird.

10. Blockiervorrichtung (33) nach Anspruch 9, **dadurch gekennzeichnet, dass** die zwei Lamellen (73, 74) sich vereinen und Windungen formen.

## Claims

1. Immobilising device (33) acting on at least one strand (34, 35) of a shoelace (26), the device (33) comprising a body (40) that extends longitudinally between a first end (41) and a second end (42), transversely between a first edge (43) and a second edge (44), and in height between a connecting face (45) and a free face (46), the body (40) defining a passage (51, 52) for each strand (34, 35) of a shoelace (26), the device (33) comprising an immobilizing member (53, 54) which cooperates with the passage (51, 52) to immobilize or free each strand (34, 35) of a shoelace (26), an elastic means (73, 74) permanently urging the immobilizing member (53, 54) in an immobilizing direction, the passage (51, 52) extending longitudinally from a first end opening (55, 56) to a second end opening (57, 58), the passage (51, 52) having a longitudinal opening (61, 62) which extends from the first end opening (55, 56) to the second end opening (57, 58),
**characterized in that** the longitudinal opening (61, 62) opens onto an edge (43, 44) of the body (40) so as to allow each strand (34, 35) to be inserted into or removed from the passage (51, 52) in a transverse direction of the device,

2. Immobilizing device (33) according to Claim 1, **characterized in that** the body (40) defines a first passage (51) which extends longitudinally from a first end opening (55) to a second end opening (57), and a second passage (52) which extends longitudinally from a first end opening (56) to a second end opening (58).

3. Immobilizing device (33) according to Claim 1 or 2, **characterized in that** the longitudinal opening (61, 62) widens (63, 64) at the first end (41) of the body (40).

4. Immobilizing device (33) according to one of Claims 1 to 3, **characterized in that** the longitudinal opening (61, 62) widens (65, 66) at the second end (42) of the body (40),

5. Immobilizing device (33) according to one of Claims 1 to 4, **characterized in that** the free face (46) delimits a continuous wall along the passage (51, 52).

6. Immobilizing device (33) according to one of Claims 1 to 5, **characterized in that** it comprises an extension (67) that projects in the plane of the free face (46), in the longitudinal direction, at the first end (41),

7. Immobilizing device (33) according to one of Claims 1 to 6, **characterized in that** each edge (43, 44) extends respectively in the direction of the height of the immobilizing device, from the connecting face (45) towards the free face (46), as far as a peak (75, 76).

8. Immobilizing device (33) according to Claim 7, **characterized in that** each edge (43, 44) is generally convex, its peak (75, 76) being transversely opposite the immobilizing member (53, 54).

9. Immobilizing device (33) according to one of Claims 1 to 8, **characterized in that** each immobilizing member (53, 54) consists of a cam borne by an elastic leaf (73, 74).

10. Immobilizing device (33) according to Claim 9, **characterized in that** the two leaves (73, 74) meet and form convolutions.
